# EUROPÄISCHE PATENTSCHRIFT

(11) **EP 1 165 345 B1**
(45) Veröffentlichungstag und Bekanntmachung des Hinweises auf die Patenterteilung: **11.06.2003**
(21) Anmeldenummer: 00922552.5
(22) Anmeldetag: 26.03.2000
(51) Int. Cl.: B60N 2/52

(54) **LUFTGEFEDERTER FAHRZEUGSITZ MIT KONSTANTHALTUNG DER STATISCHEN HÖHE**
PNEUMATIC MOTOR VEHICLE SEAT WITH STABILISED STATIC HEIGHT
SIEGE DE VEHICULE A SUSPENSION PNEUMATIQUE AVEC MAINTIEN CONSTANT DE LA HAUTEUR STATIQUE

(30) Priorität: 26.03.1999 DE 19915138
(43) Veröffentlichungstag der Anmeldung: 02.01.2002
(73) Patentinhaber: Isringhausen GmbH & Co. KG, 32657 Lemgo (DE)
(72) Erfinder: ROCHAU, Stefan, D-31840 Hess. Oldendorf (DE); LIEKER, Reiner, D-32699 Extertal (DE)
(74) Vertreter: Schnekenbühl, Robert Matthias L.
(86) Internationale Anmeldenummer: EP0002664
(87) Internationale Veröffentlichungsnummer: WO00058125

(56) Entgegenhaltungen:
- EP-A- 0 873 905
- DE-A- 2 753 105
- DE-A- 3 003 578
- DE-A- 3 219 371
- US-A- 4 148 518
- US-A- 4 397 440
- US-A- 5 125 631
- US-A- 5 176 355
- US-A- 5 346 170
- US-A- 5 533 703
- US-A- 5 570 866
- US-A- 5 735 509

## Beschreibung

Die Erfindung betrifft einen mittels eines mechanischen Schwingsystems und einer Luftfeder schwingfähig abgestützten Fahrzeugsitz mit den Merkmalen des Oberbegriffs des Anspruches 1 zur Konstanthaltung der statischen Höhe des Fahrzeugsitzes unabhängig vom Gewicht des jeweiligen Sitzbenutzers.

Fahrzeugsitze dieses Typs sind aus der gattungsgemäßen DE 27 53 105 C2 der Anmelderin bekannt. Sie arbeiten mit einer Steuerscheibe, deren endseitige Schaltnocken schwinghubabhängig auf den Ventilstößel eines Belüftungsventils aufsatteln, wenn der Schwinghub des Schwingsystems einen noch als zulässig angesehenen Schwinghub oberhalb oder unterhalb der konstant zu haltenden statischen Höhe des Fahrzeugsitzes überschreitet. Der Luftdruck in der Luftfeder wird dadurch entsprechend erniedrigt oder erhöht. Nach der Bewegungsumkehr des jeweiligen Schwinghubes und kurz vor Erreichen der konstant zu haltenden statischen Höhe wird das jeweils geöffnete Ventil wieder geschlossen indem der auf dem Ventilstößel aufgesattelte Schaltnocken der Steuerscheibe wieder von dem Schaltnocken heruntergezogen wird.

Um diese voneinander verschiedenen Abstände der Schwinghub-Schaltpositionen von der konstant zu haltenden statischen Höhe beim Öffnen und beim Schließen der Ventile zu erreichen, arbeitet der bekannte Fahrzeugsitz mit einer sogenannten Nachschlepp-Steuerscheibe, bei der ein an einem Lenker des Scherenlenker-Schwingsystems befestigter Mitnehmerstift nach der Bewegungsumkehr des jeweiligen Schwinghubes zunächst eine bestimmte Nachschleppstrecke in einer Schleppstrecken-Ausnehmung der Steuerscheibe durchlaufen muß, bis er an das Ende der Schleppstrecken-Ausnehmung anschlägt und den auf den Ventilstößel aufgesattelten Schaltnocken der Steuerscheibe wieder von dem Ventilstößel des Ventils herunterziehen kann.

Von diesem Stand der Technik geht die Erfindung aus. Eine Aufgabe der vorliegenden Erfindung besteht darin, die Geräusch- und Verschleißprobleme bei der Nachschleppsteuerung dieser Art zu verringern.

Ferner hatten bisherige Sitze immer den Nachteil, dass ein freies Ausschwingen der Sitze aus der jeweils eingestellten statischen Höhe nach oben bis in den Endanschlag möglich war. Das bedeutet, dass das Sitzoberteil mitsamt dem Fahrer, beispielsweise beim Aufstehen, bis an diesen oberen Endanschlag ausschwingen kann. Für einen Höheneinstellbereich von beispielsweise 100 mm und einem Schwinghub von beispielsweise +/- 40 mm kann das in der untersten Höheneinstellposition bis zu 140 mm Ausschwingweg nach oben bedeuten. Als mögliche Folge ist beispielsweise eine Behinderung des Fahrers beim Aussteigen aus dem Fahrzeug zu nennen.

Eine weitere Aufgabe der vorliegenden Erfindung bestand demnach darin, einen Fahrzeugsitz bereitzustellen, bei dem ein maximales Ausschwingen einstellbar ist, um vorgenannte Nachteile zu vermeiden.

Geräuschprobleme sind bei den bekannten Nachschleppsteuerungen in erster Linie dadurch bedingt, daß der am Schwingsystem befestigte Mitnehmerstift funktionsgemäß an die Enden der Schleppstrecken-Ausnehmung der Steuerscheibe anschlägt und daß auch die Schaltnocken der Steuerscheibe an die Ventilstößel der Ventile anschlagen, bevor sie auf die betreffenden Ventilstößel aufsatteln können. Diese Anschlaggeräusche werden mit zunehmender Verschmutzung und dadurch bedingter Schwergängigkeit der Nachschlepp-Steuerscheibe intensiver.

Die auftretenden Verschleißprobleme bei den bekannten Nachschlepp-Steuerscheiben treten in erster Linie an den Schaltnocken der Steuerscheibe und an den Ventilstößeln der Ventile auf und sind in den letzten Jahren dadurch verstärkt worden, daß die bordeigenen Druckluftsysteme der Fahrzeuge, die auch die Luftfeder der Fahrzeugsitze mit Druckluft versorgen, zunehmend auf einem höheren Druckniveau arbeiten.

Zur Lösung der Aufgabe, Geräusch- und Verschleißprobleme bei der Nachschleppsteuerung zu verringern, wird erfindungsgemäß vorgeschlagen, bei einem Fahrzeugsitz, der zur Konstanthaltung der statischen Höhe nach dem Verfahren der DE 27 53 105 C2 arbeitet, die vorgenannte mechanische Nachschlepp-Steuerscheibe mit den dort genannten Ventilen entfallen zu lassen und statt dessen Ventile und eine Steuervorrichtung zu verwenden, die dadurch gekennzeichnet sind, daß die Ventile jeweils einen Absperrkörper (z.B. in Form eines Zylinderkolbens, einer Kugel o. dergl.) aufweisen, der zum Öffnen des Ventils entgegen der Kraft einer Schließfeder von seinem Ventilsitz abhebt, wobei der Absperrkörper aus einem ferromagnetischen Material besteht und in einem Ventilgehäuse aus Kunststoff gelagert ist, und daß die Steuervorrichtung zum Öffnen der Ventile aus einem Steuerhebel oder Steuerschlitten mit einem Dauermagneten gebildet ist, der schwinghubabhängig an den Absperrkörper des Entlüftungsventils in der Weise berührungslos angenähert wird, daß der jeweilige Absperrkörper in der Offen-Position des Ventils einen um die Abhebebewegung des Absperrkörpers von seinem Ventilsitz kleineren, jedoch berührungslosen Abstand zum Dauermagneten hat.

Diese erfindungsgemäße Lösung hat wesentliche Vorteile.

Zum einen gelingt es, durch die Verwendung eines in einem verschwenkbaren Steuerhebel oder einem verschiebbaren Steuerschlitten positionierten Dauermagneten den Absperrkörper eines Belüftungsventils oder eines Entlüftungsventils zu betätigen, ohne daß zu diesem Zweck eine mechanische Berührung zwischen den genannten Bauteilen erfolgen muß. Verschleißprobleme zwischen den genannten Bauteilen werden somit vermieden. Der Vorschlag, einen Dauermagneten (Permanentmagneten) in den Steuerhebel oder Steuerschlitten einzubauen, bietet sich an, da hierdurch keine Stromzuleitungen in die sich bewegenden Teile verlegt werden müssen, wie das der Fall wäre, wenn ein gleichwirksames Magnetfeld mittels stromdurchflossener elektrischer Leiter aufgebaut werden würde, was grundsätzlich auch möglich ist.

Die Stärke des Magnetfeldes wird von einem Ventilgehäuse, das nach der Lehre der Erfindung aus Kunststoff besteht, nicht beeinflußt. Wohl aber durch das ferromagnetische Material, aus dem die Absperrkörper der Ventile zu fertigen sind. Diese Materialien haben für das Magnetfeld eine erhebliche feldverstärkende Wirkung. Das Magnetfeld übt auf die einander gegenüberliegenden Polflächen des Dauermagneten einerseits und des jeweiligen Absperrkörpers andererseits eine zusammenziehende Kraft aus, die u.a. auch von dem Abstand zwischen dem Dauermagneten und dem Absperrkörper abhängig ist.

Diese physikalischen Sachverhalte nutzt die Lehre der Erfindung dadurch, daß der jeweilige Absperrkörper in der Offen-Position des Ventils einen um die Abhebebewegung des Absperrkörpers von seinem Ventilsitz geringeren Abstand von dem Dauermagneten hat. Die magnetischen Anziehungskräfte sind dann größer mit dem Ergebnis, daß das Ventil zeitlich länger in seiner Offen-Position gehalten wird, wenn der Steuerhebel oder Steuerschlitten mit dem Dauermagneten schwinghubabhängig von dem Absperrkörper des Ventils hinwegbewegt wird. Mit anderen Worten, der Schließzeitpunkt des Ventils wird gegenüber der schwinghubgesteuerten Bewegung des Dauermagneten in vergleichbarer Weise "nachgeschleppt", wie dies beim Stand der Technik mit der mechanischen Nachschlepp-Steuerscheibe der Fall war, jedoch mit dem sehr wesentlichen Vorteil, daß dieser Nachschleppvorgang nach der Lehre der Erfindung nunmehr berührungslos und damit verschleißärmer und geräuschärmer erfolgt.

Gemäß Anspruch 2 der vorliegenden Anmeldung wird eine für die Praxis besonders geeignete Ausführungsform der Erfindung vorgeschlagen, die dadurch gekennzeichnet ist, daß beide Ventile (Belüftungsventil und Entlüftungsventil) in einem gemeinsamen Kunststoffventilgehäuse untergebracht sind (wie das an sich bekannt ist) und so zueinander ausgerichtet sind, daß ihre jeweiligen Absperrkörper zueinander parallele und gleichgerichtete Abhebebewegungen von ihren jeweiligen Ventilsitzen durchführen. Das gemeinsame Kunststoff-Ventilgehäuse soll die Ventilteile weitgehend hermetisch gegen Außeneinflüsse, Verschmutzungseinflüsse u. dergl. abschließen, und der Dauermagnet soll an einem Schwenkhebel befestigt sein, der an einer Außenwandfläche des Ventilgehäuses schwenkbar gelagert ist und schwinghubabhängig den Dauermagneten an der Außenwandfläche des Ventilgehäuses und quer zu den Abhebebewegungen der Absperrkörper an die jeweiligen Absperrkörper annähert derart, daß im Endzustand der Annäherung die Polfläche des Dauermagneten planparallel und im Abstand der vorzugsweise planen Bodenfläche des Absperrkörpers gegenüberliegt.

Mit der erfindungsgemäßen Lösung der Konstanthaltung der statischen Höhe eines Fahrzeugsitzes läßt sich auf einfache und kostengünstige Weise auch eine integrierte Höheneinstellung des Schwingsystems kombinieren, die nach Anspruch 3 der vorliegenden Anmeldung dadurch gekennzeichnet ist, daß das Ventilgehäuse um eine Achse im Scherenkreuzungspunkt eines Scherenlenker-Schwingsystems verschwenkbar gelagert ist und daß die genaue Schwenkposition des Ventilgehäuses mittels eines am Scherenlenker und am Ventilgehäuse festgelegten, auf Zug und/oder Druck belastbaren Bowdenzuges einstellbar und fixierbar ist. Ebenfalls bevorzugt ist die Schwenkposition des Ventilgehäuses elektrisch verstellbar, bevorzugt mittels eines Stellmotors, der beispielsweise über einen Potentiometer ansteuerbar ist. Damit ist vorteilhaft auch die Realisierung von Memory-Effekten im Sitz möglich, d.h. daß vordefinierte Sitzparameter abgespeichert und abgerufen werden können.

Die zweitgenannte Aufgabe der vorliegenden Erfindung, nämlich die Bereitsstellung eines Fahrzeugsitzes, bei dem ein maximales Ausschwingen einstellbar ist, wird erfindungsgemäß gemäß dem beigeordneten Anspruch 4 gelöst. Vorteilhafte Ausführungsformen sind in den entsprechenden Unteransprüchen gegeben.

Demgemäß stellt die vorliegende Erfindung einen Fahrzeugsitz mit integrierter statischer Höheneinstellung bereit, der ein Regelsystem aufweist, mit dessen Hilfe gleichzeitig und automatisch zur statischen Höheneinstellung ein konstantes maximales Ausschwingen des Fahrzeugsitzes einstellbar ist.

Dieses Regelsystem entspricht einem mitfahrenden Höhenanschlag und gewährleistet in jeder eingestellten Höhenposition ein konstantes maximales Ausschwingen des Sitzes bzw. einen konstanten freien Schwinghub des Sitzes nach oben oder nach unten oder besonders bevorzugt sowohl nach oben wie auch nach unten. Das bedeutet, daß egal auf welche Höhenposition der Fahrzeugsitz eingestellt ist, mittels des Regelsystems ein bestimmbares konstantes Ausschwingen des Fahrzeugsitzes aus dieser eingestellten Höhenposition eingestellt bzw. geregelt wird. Dadurch wird verhindert, daß der Fahrzeugsitz aus der eingestellten Höhenposition frei nach oben oder unten bis an den Endanschlag ausschwingen kann und somit eventuell eine Behinderung des Fahrers, beispielsweise beim Aussteigen aus dem Fahrzeug, bedeuten kann. Mittels des mitfahrenden Höhenanschlags wird sichergestellt, daß der Fahrzeugsitz zwar eine gewisse, angenehme Federung für den Fahrer aufweist, was beispielsweise beim Überfahren auftretender Bodenunebenheiten bzw. Bodenwellen nötig ist, gleichzeitig wird aber auch verhindert, daß das mit der Federung gekoppelte Ausschwingen so groß ist, daß es für den Fahrer unbequem oder hinderlich wird.

In einer bevorzugten Ausführungsform des erfindungsgemäßen Sitzes weist das Regelsystem mindestens einen Exzenter und einen Sperrhebel auf, wobei der Exzenter und der Sperrhebel in Abhängigkeit des Ausschwingens des Fahrzeugsitzes gegeneinander bis zu einer Anschlagposition bewegbar sind und derart zusammenwirken, dass bei jeder Höheneinstellung gleichzeitig und automatisch ein konstantes maximales Ausschwingen des Fahrzeugsitzes einstellbar ist. Insbesondere bevorzugt wird durch die eingestellte Höhe der maximale absolute Ausschwingweg durch den konstanten maximalen Ausschwingweg definiert.

Der Exzenter entspricht einer Kreisscheibe, vorzugsweise einer Kreisscheibe, deren Umfang zumindest teilweise eine verzahnte Oberfläche aufweist. Diese Kreisscheibe ist außerhalb ihres Kreismittelpunktes gelagert. Dabei ist sie vorzugsweise im Scherenmittellagerpunkt des Schwingsystems des Fahrzeugsitzes drehbar gelagert. Vorzugsweise ist auf dem Exzenter ein Zahnkranz angeordnet, der ebenfalls im Scherenmittellagerpunkt drehbar gelagert ist und fest mit dem Exzenter verbunden ist.

Der Sperrhebel ist beweglich zwischen der Innen- und der Außenschere des Schwingsystems des Fahrzeugsitzes angeordnet und weist vorzugsweise ebenfalls eine zumindest zum Teil verzahnte Oberfläche auf.

Der Exzenter und der Sperrhebel haben in der Ruheposition des Fahrzeugsitzes einen bestimmten einstellbaren Abstand zueinander, wobei dabei vorzugsweise jeweils die entsprechend verzahnten Flächen von Exzenter und Sperrhebel einander gegenüberliegen.

Federt das Schwingsystem des Fahrzeugsitzes beispielsweise nach oben aus, beispielsweise aufgrund einer Bodenwelle, so erfolgt eine Relativbewegung zwischen Sperrhebel und Exzenter. Beim Ausschwingen des Fahrzeugsitzes ändert sich der Winkel zwischen Innen- und Außenschere des Schwingsystems des Fahrzeugsitzes bzw. beim Ausschwingen des Fahrzeugsitzes nach oben wird der Winkel größer, einhergehend mit einer Bewegung des an Innen- und Außenschere angeordneten Sperrhebels in Richtung Exzenter. Das bedeutet, daß mit zunehmendem Ausschwingen des Fahrzeugsitzes aus seiner Ruheposition der Winkel zwischen Innen- und Außenschere des Schwingsystems des Fahrzeugsitzes immer größer wird und damit gekoppelt der Abstand zwischen Sperrhebel und Exzenter entsprechend kleiner. Bei einem bestimmten Ausschwingen ist eine Anschlagposition erreicht, in der nämlich der Sperrhebel und der Exzenter, vorzugsweise mit ihren jeweiligen verzahnten Flächen aufeinandertreffen und damit ein weiteres Ausschwingen des Fahrzeugsitzes stoppen.

Um nun das Schwingsystem in seiner statischen Höheneinstellung unter Konstanthaltung des maximalen Ausschwingens des Fahrzeugsitzes zu ändern, wird der Exzenter auf dem Scherenmittellagerpunkt gleichzeitig und automatisch zur statischen Höheneinstellung radial derart verstellt, dass sich ein anderer, entsprechend der Höheneinstellung angepasster Anschlagpunkt auf der verzahnten Exzenterfläche ergibt, so dass der Abstand zwischen Sperrhebel und Exzenter und somit das maximale Ausschwingen konstant bleiben. Das bedeutet, dass das gleiche maximale Ausschwingen bzw. der gleiche freie Schwingweg nach oben für jede eingestellte Höhenposition realisiert ist. Näher erläutert, entspricht die Verstellung der statischen Höhe des Fahrzeugsitzes einer entsprechenden Verstellung des Winkels zwischen Innen- und Außenschere des Schwingsystems des Fahrzeugsitzes. Dies wiederum geht aber, wie bereits erläutert, einher mit einer Bewegung des an ihnen angeordneten Sperrhebels relativ zum Exzenter, d.h. der Abstand zwischen Sperrhebel und Exzenter würde dabei zunächst verändert werden. Um einen konstanten Höhenanschlag zu gewährleisten, muß aber der Abstand zwischen Sperrhebel und Exzenter in jeder Höhenposition des Sitzes gleich sein. Dies wird erfindungsgemäß dadurch erreicht, daß der Exzenter entsprechend der Relativbewegung des Sperrhebels bei jeder neuen Höhenpositionseinstellung so gedreht wird, daß der Abstand zwischen Sperrhebel und Exzenter konstant bleibt. Ermöglicht wird dies durch die Lagerung des Exzenters außerhalb des Kreismittelpunktes.

In einer bevorzugten Ausführungsform des Fahrzeugsitzes erfolgt die automatische und gleichzeitige Einstellung des Exzenters relativ zu jeder neuen statischen Höheneinstellung des Fahrzeugsitzes mittels eines Getriebes, vorzugsweise mittels eines zweistufigen Getriebes.

Das zweistufige Getriebe besteht dabei vorzugsweise aus einem ersten Zahnhebel und einem zweiten Zahnhebel. Der erste Zahnhebel ist dabei vorzugsweise fest mit dem Luftventil, das ebenfalls drehbar auf dem Scherenmittellagerpunkt angeordnet ist, verbunden. Der zweite Zahnhebel ist drehbar an der Innenschere gelagert. Letzterer dient zur notwendigen Übersetzung der unterschiedlichen Drehwinkel zwischen dem Luftventil und dem Exzenter beim Verstellen der statischen Höhe. Der zweite Zahnhebel weist deshalb zwei übereinander angeordnete und fest miteinander verbundene Zahnkränze auf, wobei der Durchmesser der Zahnkränze entsprechend der gewünschten bzw. der geforderten Übersetzung gewählt ist. Exzenter, erster und zweiter Zahnhebel sind zueinander derart angeordnet, daß der Zahnkranz des ersten Zahnhebels in einen der beiden Zahnkränze des zweiten Zahnhebels eingreift, während der auf dem Exzenter angeordnete Zahnkranz in den anderen der beiden Zahnkränze des zweiten Zahnkranzes eingreift.

Bei jeder Höheneinstellung des Fahrzeugsitzes wird, wie bereits erläutert, der Winkel zwischen Innen- und Außenschere des Schwingsystems als Folge einer Veränderung der Position des Höheneinstellventils entsprechend verändert. Dies geht einher mit einer Drehung des ersten Zahnhebels, an welchem der Bowdenzug ebenfalls angreift. Diese Drehung des ersten Zahnhebels führt aufgrund der Verzahnung zur Drehung des zweiten Zahnhebels, welcher wiederum aufgrund der entsprechenden, ineinandergreifenden Zahnkränze eine Drehung des Exzenters bewirkt. Über die Wahl der Durchmesser der Zahnkränze wird die notwendige Übersetzung festgelegt, nämlich um welchen Winkel der Exzenter gedreht werden muß, damit bei einer bestimmten Höheneinstellung der Abstand zwischen Exzenter und Sperrhebel konstant bleibt.

Der Ventileinstellwinkel weist dabei bevorzugt 15° bis 50°, besonders bevorzugt 30 bis 40°, insbesondere bevorzugt 33 bis 37° auf. Der Einstellwinkel des Zahnhebels 2 beträgt bevorzugt 50 bis 140°, bevorzugt 70 bis 110°, besonders bevorzugt 90° und der Einstellwinkel des Exzenters beträgt bevorzugt 100 bis 210°, besonders bevorzugt 130 bis 190°, insbesondere bevorzugt 165 bis 175°. Die hierdurch erreichte Übersetzung zwischen Ventil und Exzenter bestimmt sich aus den vorgewählten Einstellwinkeln und beträgt besonders bevorzugt ca. 1:4,7.

Nachfolgend wird ein Ausführungsbeispiel der Erfindung anhand der Zeichnungen näher beschrieben. Es zeigen:
Fig. 1 bis 4 das neue Luftventil in verschiedenen Verschwenkpositionen des Steuerhebels mit den jeweils zugeordneten Ventilstellungen,
Fig. 5 und 6 in vereinfachter Darstellung Seitenansichten eines Scherenlenker-Schwingsystems mit dem neuen Luftventil.
Fig. 7 bis 9 in vereinfachter Darstellung Seitenansichten eines Fahrzeugsitzes mit einem erfindungsgemäßen Regelsystem zur automatischen Einstellung eines maximalen Ausschwingen des Fahrzeugsitzes.

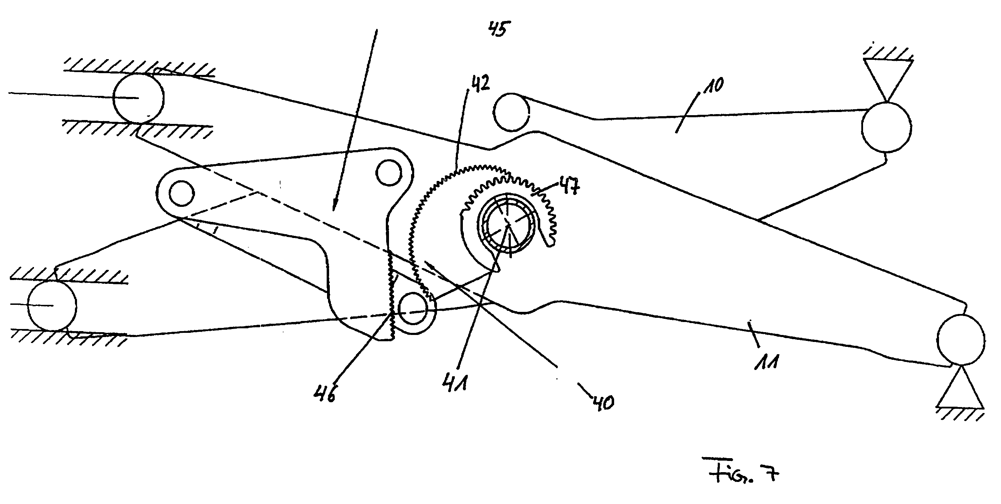

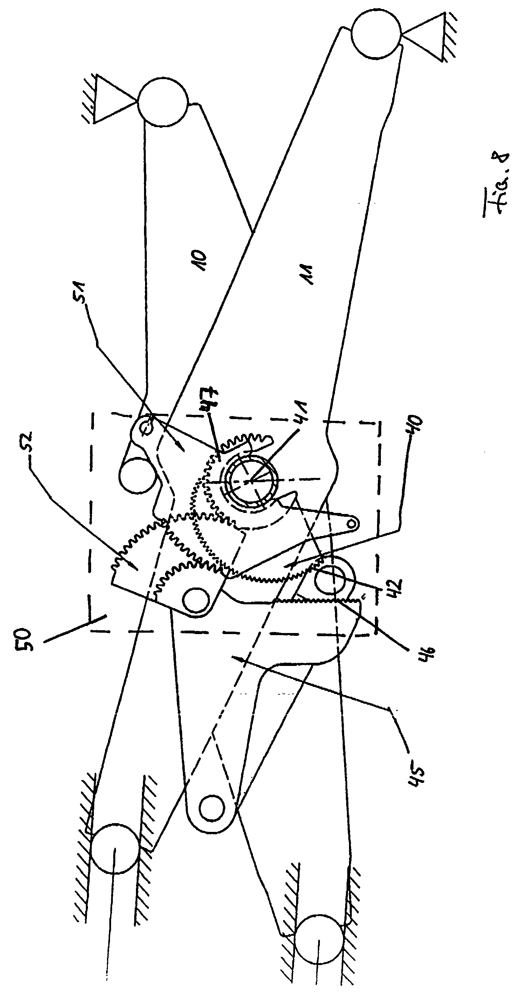

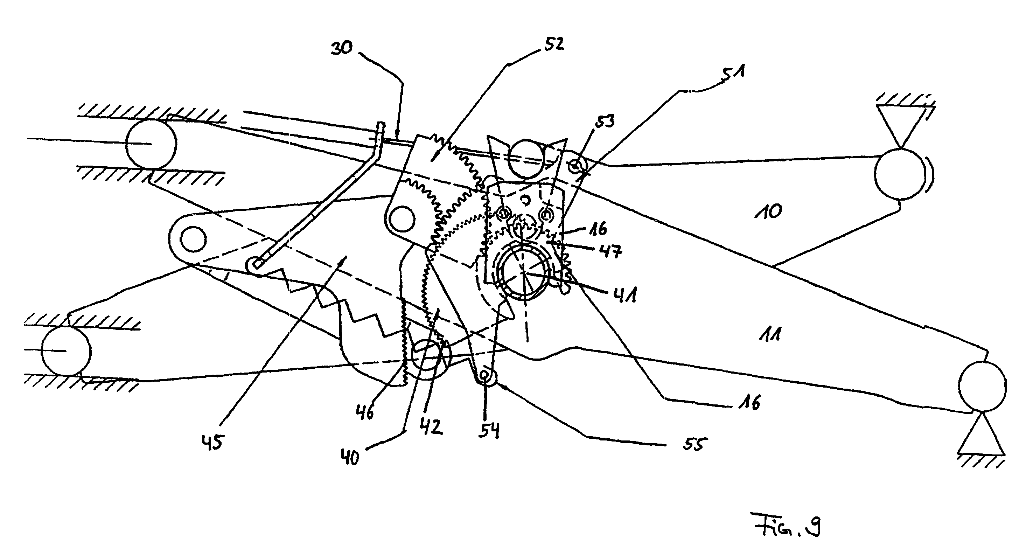

Fig. 5 zeigt in einer vereinfachten Darstellung die Seitenansicht eines Scherenlenker-Schwingsystems für Fahrzeugsitze, wie es bekannt ist. Die Scherenlenker 10 und 11 sind darstellungsgemäß auf der linken Seite jeweils mit einem Festlager 12 und 13 und darstellungsgemäß auf der rechten Seite jeweils mit einem Loslager (= horizontale Verschiebelager 14 und 15) an oder in dem Sitzrahmen und an oder in dem Bodenrahmen des Fahrzeugsitzes gelagert. Das Schwingsystem umfaßt weiterhin eine Luftfeder (nicht dargestellt, da bekannt), die das Schwingsystem schwingfähig abstützt und deren Luftfeder-Innendruck durch Belüften (= Luftdruckerhöhung) und durch Entlüften (= Luftdruckabsenkung) so gesteuert wird, daß der Fahrzeugsitz unabhängig von dem Gewicht des jeweiligen Sitzbenutzers um eine vorgegebene statische Höhe schwingt, d.h. diese wird konstant gehalten.

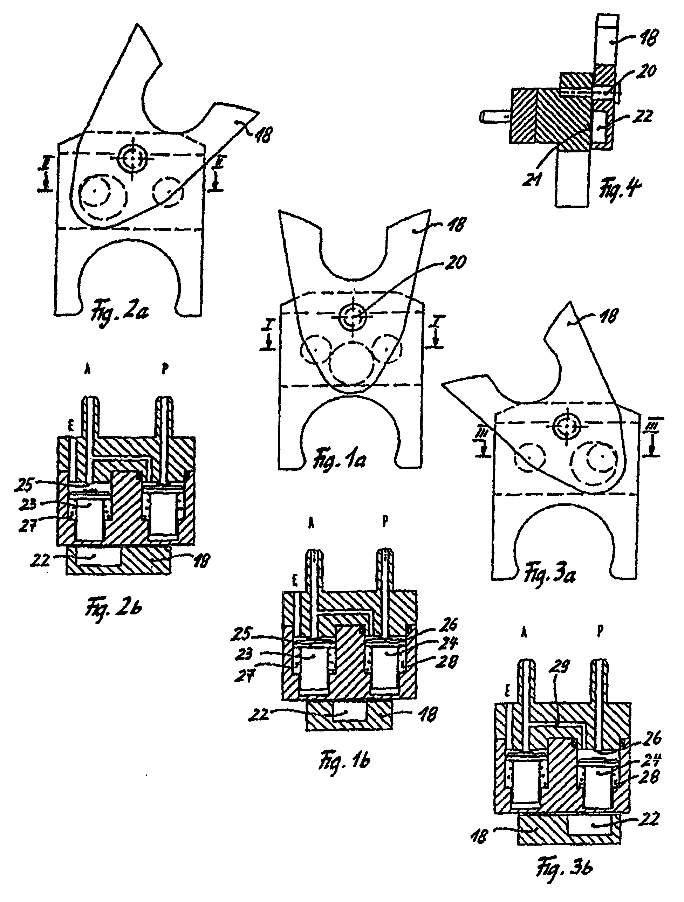

Zur automatischen Konstanthaltung der statischen Höhe dient das sogenannte Luftventil 16 (siehe Fig. 5), in dessen Kunststoffgehäuse ein Belüftungsventil und ein Entlüftungsventil integriert sind, wie dies anhand der Fig. 1 bis 4 nachfolgend näher beschrieben ist. Das Belüftungsventil ist über die in Fig. 5 dargestellte Druckluftleitung A mit der Luftfeder und über die Druckluftleitung P mit der bordeigenen Druckluftversorgung des Fahrzeuges verbunden.

Das Luftventil 16 sitzt auf der Achse 17 im Scherenkreuzungspunkt des Scherenlenker-Schwingsystems und kann um diese Achse veschwenkt werden. Zu diesem Zweck ist nach Anspruch 3 der vorliegenden Anmeldung ein Bowdenzug 30 vorgesehen, der einerseits an dem Luftventil 16 angreift und andererseits an dem Scherenlenker 11 festgelegt ist. Der Bowdenzug ist auf Zug und/oder Druck belastbar, so daß mittels des Bowdenzuges die genaue Schwenkposition des Luftventils einstellbar und fixierbar ist.

An dem Luftventil 16 ist ein Steuerhebel (= Schwenkhebel 18) gelagert, mittels dem die in das Luftventil integrierten Be- und Entlüftungsventile gesteuert werden, wie dies nachfolgend anhand der Fig. 1 bis 4 näher beschrieben ist. Der Steuerhebel 18 wird schwinghubabhängig von einem Mitnehmerzapfen 19 bewegt, der an dem Scherenlenker 10 des Schwingsystems befestigt ist.

Wird mittels des Bowdenzuges 30 die genaue Schwenkposition des Luftventils 16 relativ zum Mitnehmerzapfen 19 des Schwingsystems verändert, dann ändert sich die statische Höhe des Fahrzeugsitzes, um die der Sitz schwingen soll. Ein Vergleich der Fig. 5 mit Fig. 6 zeigt dies genauer. In der Fig. 5 befindet sich die statische Höhe des Fahrzeugsitzes auf einer oberen Höhenposition H₅, und in der Fig. 6 befindet sich die statische Höhe auf einer unteren Höhenposition H_{6.}

Solche integrierten Höheneinstellungsmöglichkeiten für das Schwingsystem eines Fahrzeugsitzes sind auch schon in Kombination mit den vorbekannten Nachschlepp-Steuerscheiben gebaut worden (siehe hierzu DE 33 33 604 A1 der Anmelderin), jedoch war dies sehr viel aufwendiger und störanfälliger. Die jetzt vorgeschlagene Lösung der Bowdenzugverstellung des neuen Luftventils 16 relativ zum Mitnehmerzapfen 19 des Schwingsystems ist überzeugend einfach und besitzt eine hohe Betriebssicherheit.

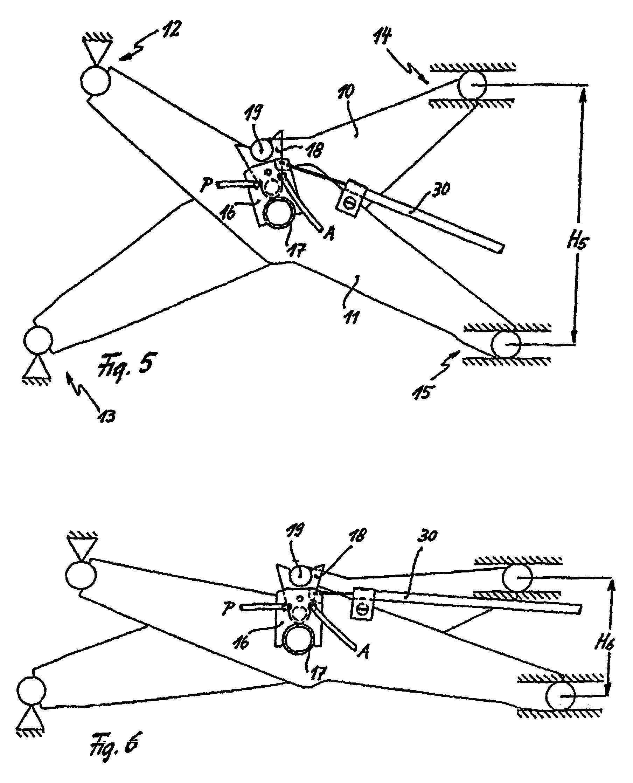

Die Fig. 1 bis 4 zeigen das neue Luftventil mit dem Steuerhebel 18 genauer. Der Steuerhebel ist auf dem Schwenkzapfen 20 an der Außenwandfläche 21 des Ventilgehäuses des Luftventils schwenkbar gelagert, wie dies Fig. 4 in Verbindung mit den Fig. 1a, 2a und 3a zeigt. In dem unteren Teil des Steuerhebels ist der Dauermagnet 22 versenkt angeordnet. Seine Polfläche bewegt sich eng, aber nahezu berührungslos über die Außenwandfläche 21 des Ventilgehäuses.

Die Fig. 1a, 2a und 3a zeigen die drei wesentlichen Schwenkpositionen des Steuerhebels, nämlich in Fig. 1a die Mittelposition, die der Steuerhebel auf der statischen Höhe des Fahrzeugsitzes einnimmt und in der sowohl das Belüftungsventil als auch das Entlüftungsventil geschlossen sind. In Fig. 2a befindet sich der Steuerhebel in einer Schwenkposition, in der das Entlüftungsventil geöffnet ist, und Fig. 3a zeigt die Schwenkposition des Steuerhebels bei geöffnetem Belüftungsventil.

Jeder der Fig. 1a, 2a und 3a ist eine Querschnittsdarstellung gemäß den Fig. 1b, 2b und 3b zugeordnet, jeweils entsprechend einem Querschnitt durch die Schnittebenen I-I, II-II bzw. III-III in den Fig. 1a, 2a und 3a. Diese Querschnitte zeigen die jeweiligen Ventilstellungen.

In Fig. 1b befindet sich der Dauermagnet 22 in seiner Mittelstellung. Beide Absperrkörper 23 und 24 sind von dem Magnetfeld des Dauermagneten nicht oder nur wenig erfaßt, so daß sowohl das Entlüftungsventil, das der Absperrkörper 23 mit seinem zugeordneten Ventilsitz 25 bildet, als auch das Belüftungsventil, das durch den Absperrkörper 24 mit dem Ventilsitz 26 gebildet ist, mittels ihren jeweiligen Schließfedern 27 und 28 geschlossen sind.

In Fig. 2b befindet sich der Steuerhebel 18 mit dem Dauermagneten 22 in seiner linksseitigen Schwenkposition, so daß der ferromagnetische Absperrkörper 23 von dem Magnetfeld des Dauermagneten erfaßt wird und feldverstärkend wirkt. Die aus der höheren magnetischen Flußdichte resultierende Kraft zieht den Absperrkörper 23 entgegen der Kraft der Schließfeder 27 von ihrem Ventilsitz 25 ab, so daß das Entlüftungsventil 23/25 geöffnet ist, und Druckluft aus der Luftfeder über den Druckluftanschluß A und die Auslaßbohrung E entweichen kann.

In Fig. 3b ist das Entlüftungsventil 23/25 geschlossen und der Dauermagnet 22 befindet sich vor dem Absperrkörper 24 des Belüftungsventils 24/26. Dementsprechend ist das Belüftungsventil 24/26 geöffnet, und Druckluft aus dem Bordnetz des Kraftfahrzeuges gelangt über den Druckluftanschluß P und die Bypass-Leitung 29 in die Druckluftleitung A zur Luftfeder.

Die Querschnitte der verschiedenen Ventilstellungen in den Fig. 1b, 2b und 3b verdeutlichen die kompakte und weitgehend hermetisch abgeschlossene Anordnung aller Ventilbauteile in dem gemeinsamen Kunststoff-Ventilgehäuse. Die Ventile arbeiten in dieser abgekapselten Bauweise sehr geräuscharm und bleiben verschmutzungsfrei und leichtgängig. Der außerhalb des geschlossenen Ventilgehäuses bewegte Dauermagnet hat keinen mechanischen Kontakt zu den Ventilbauteilen. Verschleißprobleme zwischen dem Steuerhebel und den Ventilbauteilen sind somit ausgeschlossen.

Figur 7 zeigt eine Seitenansicht eines Scherenlenkerschwingsystems für Fahrzeuge, wobei das Schwingsystem ein erfindungsgemäßes Regelsystem aufweist, womit automatisch und gleichzeitig mit der statischen Höheneinstellung ein maximales Ausschwingen des Fahrzeugsitzes einstellbar ist.

In der hier dargestellten bevorzugten Ausführungsform der Erfindung besteht das Regelsystem aus einem verstellbaren Exzenter 40 und einem Sperrhebel 45. Der Exzenter 40 ist auf dem Scherenmittellagerpunkt 41 des Schwingsystems drehbar gelagert. Der Sperrhebel 45 ist ebenfalls beweglich und vorzugsweise zwischen der Innenschere 10 und der Außenschere 11 des Schwingsystems angeordnet. Federt das Schwingsystem nach oben aus, beispielsweise aufgrund einer Bodenwelle, so führt dies gleichzeitig und automatisch zu einer Relativbewegung zwischen dem Sperrhebel 45 und dem Exzenter 40. Dadurch kommt es dann letztlich zum Anschlagen einer verzahnten Fläche 46 des Sperrhebels 45 an einer gleichfalls verzahnten Fläche 42 des Exzenters 40, wodurch ein maximales Ausschwingen erreicht ist.

Figur 8 zeigt eine Seitenansicht eines Scherenlenker-Schwingsystems eines weiteren erfindungsgemäßen Fahrzeugsitzes mit einem erfindungsgemäßen Regelsystem. Das Regelsystem weist hier ebenfalls einen verstellbaren Exzenter 40 und einen Sperrhebel 45 auf.

Ferner umfasst das Regelsystem ein zweistufiges Getriebe 50, das aus einem ersten Zahnhebel 51 und einem zweiten Zahnhebel 52 besteht.

Mittels des zweistufigen Getriebes 50 lässt sich die Verstellung des Exzenters 40 auf den Scherenmittellagerpunkt 41 realisieren. Je nach statischer Höheneinstellung ist es nötig, den Exzenter 40 entsprechend zu verstellen, um zu erreichen, dass bei jeder Höheneinstellung das maximale Ausschwingen des Fahrzeugsitzes konstant ist.

Der erste Zahnhebel 51 ist dabei fest mit dem Luftventil 16, das ebenfalls drehbar auf dem Scherenmittellagerpunkt 41 angeordnet ist, verbunden. Der zweite Zahnhebel 52 ist drehbar an der Innenschere 10 gelagert und dient zur notwendigen Übersetzung der unterschiedlichen Drehwinkel zwischen dem Luftventil 16 und dem Exzenter 40 beim Verstellen der statischen Höhe. Der zweite Zahnhebel 52 weist dabei zwei übereinander angeordnete Zahnkränze unterschiedlicher Durchmesser auf. Einer der beiden Zahnkränze ist relativ zum ersten Zahnhebel 51 derart angeordnet, daß er in dessen Zähne eingreift. Wird nun die statische Höhe des Fahrzeugsitzes verändert, so wird damit einhergehend der drehbar gelagerte erste Zahnhebel 51 gedreht. Aufgrund der Verzahnung des ersten Zahnhebels 51 mit einem der beiden Zahnkränze des zweiten Zahnhebels 52 kommt es dabei auch gleichzeitig zur Drehung des zweiten Zahnhebels 52. Diese Drehung bewirkt wiederum aufgrund der Verzahnung des anderen der beiden Zahnkränze des zweiten Zahnhebels 52 mit dem auf dem Exzenter 40 angeordneten und mit dem Exzenter fest verbundenen Zahnkranzes 47 eine entsprechende Drehung des Exzenters. Dadurch ergibt sich ein entsprechend der Höheneinstellung angepaßter Anschlagpunkt auf der verzahnten Exzenterfläche, so daß das maximale Ausschwingen konstant bleibt. Der Drehwinkel des Luftventils 16 liegt beim Verstellen der statischen Höhe in einem Bereich von 0° bis 40°.

Um dabei bei jeder statischen Höhe einen konstanten Abstand zwischen Sperrhebel 45 und Exzenter 40 im Ruhezustand zu erhalten, muß der Drehwinkel entsprechend ein einem Bereich von 0° bis 170° liegen. Diese notwendige Übersetzung erfolgt mittels des zweistufigen Getriebes 50.

Figur 9 zeigt eine weitere Ausführungsform eines Schwingsystems eines erfindungsgemäßen Fahrzeugsitzes.

Das Luftventil 16 ist über entsprechende Druckluftleitungen mit der Luftfeder bzw. mit der bordeigenen Druckluftversorgung des Fahrzeuges verbunden.

Das Luftventil 16 ist, wie bereits erwähnt, drehbar auf dem Scherenmittellagerpunkt angeordnet. Um das Luftventil 16 zu drehen, ist ein Bowdenzug 30 vorgesehen, der an einem Anbindungspunkt 53 den Bowdenzuges 30 fest an dem ersten Zahnhebel 51 angreift und andererseits über eine Zugfeder 55 an einem an dem Scherenlenker angeordneten Anbindungspunkt 54 der Zugfeder 55 im ersten Zahnhebel mit dem Zahnhebel 51 verbunden ist. Dieser Zahnhebel 51 wiederum ist fest mit dem Luftventil 16 verbunden. Der Bowdenzug 30 ist auf Zug und/oder Druck belastbar, so dass mittels des Bowdenzuges 30 die genaue Schwenkposition des Luftventils 16 einstellbar und fixierbar ist. Mittels des in Figur 8 bereits beschriebenen zweistufigen Getriebes 50 wird dann entsprechend der Einstellung des Luftventils 16 automatisch der Exzenter 40 eingestellt.

### BEZUGSZEICHENLISTE

- 10, 11: Scherenlenker
- 12, 13: Festlager
- 14, 15: horizontales Verschiebelager
- 16: Luftventil
- 17: Achse
- 18: Steuerhebel
- 19: Mitnehmerzapfen
- 20: Schwenkzapfen
- 21: Außenwand
- 22: Dauermagnet
- 23, 24: Absperrkörper
- 25, 26: Ventilsitz
- 27, 28: Schließfeder
- 30: Bowdenzug
- 40: Exzenter
- 41: Scherenmittellagerpunkt
- 42: Verzahnte Fläche des Exzenters
- 45: Sperrhebel
- 46: Verzahnte Fläche des Sperrhebels
- 47: Auf dem Exzenter angeordneter Zahnkranz
- 50: zweistufiges Getriebe
- 51: erste Zahnhebel
- 52: zweite Zahnhebel
- 53: Anbindungspunkt Bowdenzug im ersten Zahnhebel (51)
- 54: Anbindungspunkt Zugfeder im ersten Zahnhebel
- 55: Zugfeder

## Patentansprüche

1. Fahrzeugsitz, der mittels eines mechanischen Schwingsystems und einer Luftfeder schwingfähig abgestützt ist
- und dessen statische Höhe unabhängig vom Gewicht des jeweiligen Sitzbenutzers automatisch konstant gehalten wird, indem das Schwingsystem mittels einer Steuervorrichtung ein Belüftungsventil oder ein Entlüftungsventil für die Luftfeder schwinghubabhängig betätigt derart,
- daß das Entlüftungsventil mit einem über die statische Höhe steigenden Schwinghub und das Belüftungsventil mit einem unter die statische Höhe fallenden Schwinghub jeweils geöffnet und nach der Bewegungsumkehr des jeweiligen Schwinghubes und vor Erreichen der statischen Höhe geschlossen wird,
- wobei der Abstand der Schwinghub-Schaltpositionen von der statischen Höhe beim Schließen der Ventile um eine bestimmte Nachschleppstrecke kleiner ist als der Abstand der Schwinghub-Schaltpositionen von der statischen Höhe beim Öffnen der Ventile,
**dadurch gekennzeichnet,**
- **daß** die Ventile jeweils einen Absperrkörper (23, 24) aufweisen, der zum Öffnen des Ventils entgegen der Kraft einer Schließfeder (27, 28) von seinem Ventilsitz (25, 26) abhebt,
- **daß** der Absperrkörper (23, 24) aus einem ferromagnetischen Material besteht und in einem Ventilgehäuse aus Kunststoff gelagert ist
- und **daß** die Steuervorrichtung zum Öffnen der Ventile aus einem Steuerhebel (18) oder einem Steuerschlitten mit einem Dauermagneten (22) besteht, der schwinghubabhängig an den Absperrkörper des Belüftungsventils (24/26) oder an den Absperrkörper des Entlüftungsventils (23/25) in der Weise berührungslos angenähert wird, daß der jeweilige Absperrkörper (23, 24) in der Offen-Position des Ventils einen um die Abhebebewegung des Absperrkörpers von seinem Ventilsitz kleineren berührungslosen Abstand zum Dauermagneten hat.

2. Fahrzeugsitz nach Anspruch 1,
**dadurch gekennzeichnet,**
- **daß** der Absperrkörper (24) des Belüftungsventils und der Absperrkörper (23) des Entlüftungsventils in einem gemeinsamen Ventilgehäuse und mit zueinander parallelen, gleichgerichteten Abhebebewegungen von ihren Ventilsitzen (26, 25) angeordnet sind,
- **daß** das Ventilgehäuse die Absperrkörper und ihre jeweiligen Abhebebewegungsräume weitgehend hermetisch gegen Außeneinflüsse abschirmt
- und **daß** der Dauermagnet (22) an einem Steuerhebel (18) befestigt ist, der an einer Außenwandfläche des Ventilgehäuses schwenkbar gelagert ist und schwinghubabhängig den Dauermagneten an der Außenwandfläche des Ventilgehäuses und quer zu den Abhebebewegungen der Absperrkörper an die jeweiligen Absperrkörper annähert derart, daß im Endzustand der Annäherung die Polfläche des Dauermagneten (22) planparallel und im Abstand der vorzugsweise planen Bodenfläche des jeweiligen Absperrkörpers (23, 24) gegenüberliegt.

3. Fahrzeugsitz nach Anspruch 2 mit einer integrierten Höheneinstellung,
**dadurch gekennzeichnet,**
- **daß** das Ventilgehäuse um eine Achse (17) im Scherenkreuzungspunkt eines Scherenlenker-Schwingsystems verschwenkbar gelagert ist
- und **daß** die genaue Schwenkposition des Ventilgehäuses mittels eines am Scherenlenker und am Ventilgehäuse festgelegten, auf Zug und/oder Druck belastbaren Bowdenzuges (30) einstellbar und fixierbar ist.

4. Fahrzeugsitz mit integrierter statischer Höheneinstellung nach einem der vorhergehenden Ansprüche,
**dadurch gekennzeichnet, daß**
der Fahrzeugsitz ein Regelsystem aufweist, womit automatisch und gleichzeitig mit der statischen Höheneinstellung ein maximales Ausschwingen des Fahrzeugsitzes einstellbar ist.

5. Fahrzeugsitz nach dem vorhergehenden Anspruch,
**dadurch gekennzeichnet, daß**
das Regelsystem mindestens einen Exzenter (40) und einen Sperrhebel (45) aufweist, wobei der Exzenter (40) und der Sperrhebel (45) in Abhängigkeit des Ausschwingens des Fahrzeugsitzes gegeneinander bis zu einer Anschlagposition bewegbar sind und derart zusammenwirken, dass bei jeder statischen Höheneinstellung automatisch und gleichzeitig ein konstantes maximales Ausschwingen des Fahrzeugsitzes einstellbar ist.

6. Fahrzeugsitz nach einem der Ansprüche 4 oder 5,
**dadurch gekennzeichnet, daß**
der Exzenter (40) mittels eines zweistufigen Getriebes (50) relativ zu jeder statischen Höheneinstellung einstellbar ist.

## Claims

1. Vehicle seat which is supported, capable of oscillation, by means of a mechanical oscillation system and a pneumatic spring
- and the static height of which is automatically kept constant, regardless of the weight of the respective seat user, in that the oscillation system, by means of a control device, activates an aeration valve or an air-venting valve for the pneumatic spring, depending on the oscillation stroke, such that
- the air-venting valve is opened with an oscillation stroke rising above the static height and the aeration valve is opened with an oscillation stroke falling below the static height and is closed after the reversal of the respective oscillation stroke and before the static height is reached,
- the distance between the oscillation stroke-switching positions and the static height upon closure of the valves being smaller by a certain trailing margin than the distance between the oscillation stroke-switching positions and the static height upon opening of the valves,
**characterized in that**
- the valves each have a stop element (23, 24) which for the opening of the valve lifts off from its valve seat (25, 26) against the force of a closing spring (27, 28)
- the stop element (23, 24) consists of a ferromagnetic material and is housed in a valve housing made of plastic
- and the control device for opening the valves consists of a control lever (18) or a control carriage with a permanent magnet (22) which is brought, depending on the oscillation stroke, without contact up against the stop element of the aeration valve (24/26) or the stop element of the air-venting valve (23/25), such that the respective stop element (23, 24), in the open position of the valve, maintains a contactless distance from the permanent magnet which is smaller by the lifting movement of the stop element from its valve seat.

2. Vehicle seat according to claim 1,
**characterized in that**
- the stop element (24) of the aeration valve and the stop element (23) of the air-venting valve are arranged in a common valve box and with equidirectional lifting movements parallel to each other, from their valve seats (26, 25)
- the valve box screens the stop elements and their respective lifting movement spaces largely hermetically from external influences
- and the permanent magnet (22) is attached to a control lever (18) which is swivellably housed against an outer wall surface of the valve box and, depending on the oscillation stroke, brings the permanent magnet on the outer wall surface of the valve box and across the lifting movements of the stop elements up against the respective stop elements, such that in the final state of the approach, the pole face of the permanent magnet (22) lies opposite plane-parallel and at a distance from the preferably plane base surface of the respective stop element (23,24).

3. Vehicle seat according to claim 2 with integrated height adjustment,
**characterized in that**
- the valve box is housed swivellable about an axle (17) at the scissor-type intersection point of a scissor-type bar oscillation system
- and the exact swivelling position of the valve box can be set and fixed by means of a Bowden cable (30), fixed to the scissors-type bar and to the valve box, which can be subjected to a tensile or compressive load.

4. Vehicle seat with integrated static height adjustment according to one of the previous claims,
**characterized in that**
the vehicle seat has a regulation system with which a maximum outward oscillation of the vehicle seat can be set automatically and simultaneously with the static height adjustment.

5. Vehicle seat according to the previous claim
**characterized in that**
the regulation system has at least one eccentric (40) and one catch lever (45), the eccentric (40) and the catch lever (45), depending on the outward oscillation of the vehicle seat, being movable against each other up to a stop position and cooperating such that with every static height adjustment a constant maximum outward oscillation of the vehicle seat can be set automatically and simultaneously.

6. Vehicle seat according to one of claims 4 or 5,
**characterized in that**
the eccentric (40) can be set relative to each static height adjustment by means of a two-stage drive (50).

## Revendications

1. Siège de véhicule supporté avec capacité d'oscillation au moyen d'un système oscillant mécanique et d'un ressort pneumatique
- dont la hauteur statique est automatiquement maintenue constante indépendamment du poids de l'utilisateur du siège, grâce au fait que le système oscillant actionne, au moyen d'un dispositif de commande, une soupape d'admission d'air ou une soupape d'échappement d'air associées au ressort pneumatique en fonction de la course d'oscillation de telle sorte que
- la soupape d'échappement d'air et la soupape d'admission d'air sont respectivement ouvertes chaque fois que la course d'oscillation dépasse la hauteur statique et chaque fois que la course d'oscillation tombe en-dessous de la hauteur statique et sont fermées après inversion de la course d'oscillation et avant que la hauteur statique soit atteinte,
- la distance entre les positions de commande de la course d'oscillation et la hauteur statique à la fermeture des soupapes étant inférieure, d'une course de temporisation définie, à la distance entre les positions de commande de la course d'oscillation et la hauteur statique à l'ouverture des soupapes,
**caractérisé en ce que**
- les soupapes comprennent chacune un corps d'arrêt (23, 24) qui, pour ouvrir la soupape, se détache de son siège de soupape (25, 26) à l'encontre de la force d'un ressort de fermeture (27, 28),
- **en ce que** les corps d'arrêt (23, 24) sont réalisés dans un matériau ferromagnétique et sont logés dans une cage de soupape en matière plastique
- et **en ce que** le dispositif de commande d'ouverture des soupapes se compose d'un levier de commande (18) ou d'un coulisseau de commande comportant un aimant permanent (22), qui, en fonction de la course d'oscillation, est approché sans contact du corps d'arrêt de la soupape d'admission d'air (24/26) ou du corps d'arrêt de la soupape d'échappement d'air (23/25) de manière à ce que le corps d'arrêt concerné (23, 24), en position d'ouverture de la soupape, soit séparé de l'aimant permanent d'une distance sans contact diminuée de l'amplitude de détachement du corps d'arrêt par rapport à son siège de soupape.

2. Siège de véhicule selon la revendication 1,
**caractérisé en ce que**
- le corps d'arrêt (24) de la soupape d'admission d'air et le corps d'arrêt (23) de la soupape d'échappement d'air sont agencés dans une cage de soupape commune et se détachent de leurs sièges de soupape respectifs (26, 25) selon des mouvements parallèles et de même sens,
- **en ce que** la cage de soupape protège très hermétiquement des influences extérieures les corps d'arrêt ainsi que les espaces dans lesquels ils décrivent leurs mouvements de décollement respectifs
- et **en ce que** l'aimant permanent (22) est fixé à un levier de commande (18) qui est monté pivotant sur une face de paroi externe de la cage de soupape et, en fonction de la course d'oscillation, rapproche l'aimant permanent de la face de paroi externe de la cage de soupape ainsi que du corps d'arrêt concerné, dans la direction transversale aux mouvements de déplacement des corps d'arrêt, de manière à ce qu'à la fin du mouvement d'approche la face polaire de l'aimant permanent (22) soit agencée en regard, parallèlement et à distance de la face de base de préférence plane du corps d'arrêt concerné (23, 24).

3. Siège de véhicule selon la revendication 2 à réglage de hauteur intégré,
caractérisé en ce
- la cage de soupape est montée avec capacité de pivotement autour d'un axe (17) au niveau du point de croisement des bras d'un système oscillant à bras en ciseaux
- et en ce que la position angulaire précise de la cage de soupape peut être réglée et fixée au moyen d'un câble Bowden (30) fixé au bras et à la cage de soupape et pouvant être sollicité en traction et/ou en pression.

4. Siège de véhicule à réglage de hauteur statique intégré selon l'une des revendications précédentes,
**caractérisé en ce que**
le siège de véhicule comprend un système de réglage permettant de régler automatiquement le débattement maximum du siège de véhicule en même temps que la hauteur statique.

5. Siège de véhicule selon la revendication précédente,
**caractérisé en ce que**
le système de réglage comprend au moins un excentrique (40) et un levier de blocage (45), l'excentrique (40) et le levier de blocage (45) pouvant se déplacer l'un par rapport à l'autre jusqu'à une position de butée en fonction du rebond du siège de véhicule et coopérant entre eux de telle sorte qu'un débattement maximal constant du siège de véhicule peut être réglé de manière automatique et concomitante à chaque réglage de la hauteur statique.

6. Siège de véhicule selon l'une des revendications 4 ou 5,
**caractérisé en ce que**
l'excentrique (40) peut être réglé en rapport avec chaque réglage de hauteur statique au moyen d'un mécanisme bi-étagé (50).
